# EUROPÄISCHE PATENTSCHRIFT

(11) **EP 3 472 473 B1**
(45) Veröffentlichungstag und Bekanntmachung des Hinweises auf die Patenterteilung: **05.01.2022**
(21) Anmeldenummer: 17726571.7
(22) Anmeldetag: 17.05.2017
(51) Int. Cl.: F16B 11/00

(54) **VERFAHREN ZUM VERBINDEN ZWEIER BAUTEILE SOWIE BAUTEILANORDNUNG**
METHOD FOR CONNECTING TWO COMPONENTS, AND COMPONENT ARRANGEMENT
PROCÉDÉ D'ASSEMBLAGE DE DEUX PIÈCES ET ENSEMBLE DE PIÈCES

(30) Priorität: 15.06.2016 DE 102016210664
(43) Veröffentlichungstag der Anmeldung: 24.04.2019
(73) Patentinhaber: Bayerische Motoren Werke Aktiengesellschaft, 80809 München (DE)
(72) Erfinder: REITER, Helmut, 85276 Pfaffenhofen (DE); REILÄNDER, Udo, 80935 München (DE)
(86) Internationale Anmeldenummer: PCT/EP2017/061789
(87) Internationale Veröffentlichungsnummer: WO 2017/215869

(56) Entgegenhaltungen:
- DE-A1-102008 010 884
- FR-A1- 2 629 149

## Beschreibung

Die vorliegende Erfindung betrifft ein Verfahren zum dichten und/oder form- bzw. kraftschlüssigen Verbinden eines ersten Bauteils mit einem zweiten Bauteil. Weiterhin betrifft die Erfindung eine Bauteilanordnung, die eine dichte und/oder form- bzw. kraftschlüssige Verbindung zwischen einem ersten Bauteil und einem zweiten Bauteil aufweist.

Aus dem Stand der Technik ist bekannt, dass zwei Bauteile dicht und/oder form- bzw. kraftschlüssig angeordnet werden können. Dabei muss stets eine dichte und/oder form- bzw. kraftschlüssige Verbindung zwischen den zu verbindenden Bauteilen vorhanden sein (vgl. auch DE 10 2008 010884 A1).

Allerdings zeigt der Stand der Technik, dass sich verbundene Bauteile während eines Betriebs voneinander abheben können. Außerdem bestehen aufgrund unterschiedlicher Werkstoffe, aus denen die Bauteile gefertigt sind, oftmals unterschiedliche Wärmeausdehnungskoeffizienten, wodurch sich die Bauteile bei Temperaturveränderungen unterschiedlich verhalten. Aus diesen beiden Gründen sind Relativbewegungen zwischen den Bauteilen vorhanden, welche durch die gängige Verbindungstechnik kompensiert werden müssen.

Es ist daher eine zu lösende Aufgabe zumindest einiger Ausführungsformen, ein Verfahren zum dichten und/oder form- bzw. kraftschlüssigen Verbinden zweier Bauteile anzugeben, das bei einfacher und kostengünstiger Anwendung ein sicheres und zuverlässiges Abdichten und/oder einfaches Verbinden der Bauteile zueinander ermöglicht. Es ist weiterhin Aufgabe der Erfindung, eine entsprechend dichte und/oder form- bzw. kraftschlüssige Bauteilanordnung anzugeben.

Diese Aufgaben werden durch einen Gegenstand und ein Verfahren gemäß den unabhängigen Patentansprüchen gelöst. Vorteilhafte Ausführungsformen und Weiterbildungen der Gegenstände gehen weiterhin aus den abhängigen Patentansprüchen, der nachfolgenden Beschreibung und aus den Zeichnungen hervor.

Es wird ein Verfahren zum Verbinden, insbesondere zum dichten und/oder form- bzw. kraftschlüssigen Verbinden eines ersten Bauteils mit einem zweiten Bauteil angegeben.

Bei dem Verfahren werden ein erstes Bauteil, welches einen Vorsprung mit einem Hinterschnitt aufweist, und ein zweites Bauteil, welches eine Kavität aufweist, bereitgestellt. Die Kavität kann beispielsweise einen Dicht- und/oder Verbindungsbereich bilden. Weiterhin wird ein Dicht- und/oder Verbindungsmaterial, d.h. ein Material, welches eine Dicht- und/oder Verbindungsfunktion aufweist, in die Kavität eingebracht. Das Dicht- und/oder Verbindungsmaterial kann z.B. ein flüssiges oder pastöses Material sein. Beispielsweise kann es sich bei dem Material um ein Dichtmaterial zum Abdichten gegenüber gasförmigen und/oder flüssigen Medien, wie z.B. um Silikon oder Acryl, handeln. Des Weiteren kann das Material ein Verbindungsmaterial zum form- und/oder kraftschlüssigen Verbinden der Bauteile, wie z.B. ein Klebematerial bzw. Klebstoff, sein. Beispielsweise kann der Klebstoff ein aushärtender, wie z.B. ein chemisch härtender Klebstoff sein. Weiterhin kann das Verbindungsmaterial beispielsweise Beton oder Teer sein. Je nach Anwendung weist das Material vorzugsweise mechanische, chemische sowie Temperaturbeständigkeiten auf. Darüber hinaus kann das Dicht- und/oder Verbindungsmaterial ein Dicht- und Verbindungsmaterial sein, d.h. kombiniert als Verbindungsmaterial zum form- und/oder kraftschlüssigen Verbinden der Bauteile und als Dichtmaterial ausgebildet sein.

Anschließend werden das erste Bauteil und das zweite Bauteil zu einer Bauteilanordnung zusammengefügt, wobei der Vorsprung des ersten Bauteils angefügten Zustand in die Kavität des zweiten Bauteils hineinragt. Vorzugsweise ragte Vorsprung des ersten Bauteils ebenfalls in das Dicht- und/oder Verbindungsmaterial hinein. Beispielsweise kann das erste Bauteil derart mit dem zweiten Bauteil gefügt werden, dass der Vorsprung vollständig vom Dicht- und/oder Verbindungsmaterial umgeben ist.

Durch das Eingreifen des Vorsprungs in die Kavität kann insbesondere auch vorgesehen sein, dass der Vorsprung in das Dicht- und/oder Verbindungsmaterial eingreift und dieses zumindest teilweise verdrängt. Insbesondere kann zumindest nach dem Zusammenfügen des ersten Bauteils und des zweiten Bauteils die Kavität vollständig mit dem Dicht- und/oder Verbindungsmaterial gefüllt sein.

Durch den Hinterschnitt des Vorsprungs weist die Bauteilanordnung im gefügten Zustand eine besonders feste und/oder dichte Verbindung auf. Beispielsweise kann der Vorsprung in Bezug auf eine Fügeachse hinterschnittig ausgebildet sein, die im Wesentlichen parallel zu einer planmäßigen Belastungsrichtung der Bauteilanordnung verläuft. Mit dem Begriff "planmäßige Belastungsrichtung" kann hierbei eine Richtung bezeichnet werden, in welcher bei einer bestimmungsgemäßen Nutzung der gefügten Bauteilanordnung Kräfte wirken, beispielsweise in welcher bei einer bestimmungsgemäßen Nutzung die größten Kräfte wirken. Die Fügeachse kann z.B. orthogonal zu einer Trennebene verlaufen, wobei die Trennebene wenigstens abschnittsweise tangential zu einem Öffnungsbereich der Kavität und/oder zu einem Bodenbereich der Kavität und/oder zu einer an den Vorsprung angrenzenden Oberfläche des ersten Bauteils verläuft. Weiterhin kann der Vorsprung einen oder mehrere hinterschnittige Bereiche aufweisen.

Gemäß einer weiteren Ausführungsform weist der Vorsprung eine erste Breite und eine zweite Breite auf, wobei die zweite Breite im gefügten Zustand näher am Bodenbereich der Kavität angeordnet ist als die erste Breite. Vorzugsweise ist die zweite Breite größer als die erste Breite. Beispielsweise kann sich der Vorsprung bzw. die Querschnittsfläche des Vorsprungs in Richtung des Bodenbereichs der Kavität verbreitern bzw. vergrößern. Der Vorsprung kann sich z.B. kontinuierlich in Richtung des Bodenbereichs der Kavität verbreitern. Alternativ kann sich der Vorsprung auch nur abschnittsweise in Richtung des Bodenbereichs der Kavität verbreitern. Weiterhin ist es möglich, dass der Vorsprung in Bezug auf die Fügeachse geneigt ist, sodass durch die Neigung des Vorsprungs ein Hinterschnitt gebildet wird.

Gemäß einer weiteren Ausführungsform weist die Kavität einen Öffnungsbereich und ein Bodenbereich auf, wobei der Öffnungsbereich größer ist als der Bodenbereich. Beispielsweise kann sich die Kavität ausgehend vom Bodenbereich in Richtung des Öffnungsbereichs verengen. Gemäß einer weiteren Ausführungsform weist das erste Bauteil eine Mehrzahl von Vorsprüngen und das zweite Bauteil eine Mehrzahl von Kavitäten bzw. Dicht- und/oder Verbindungsbereichen auf, wobei im gefügten Zustand zumindest jeweils ein Vorsprung in eine Kavität bzw. in der Kavität angeordnetes Dicht- und/oder Verbindungsmaterial hineinragt. Vorzugsweise weisen alle Vorsprünge einen Hinterschnitt auf.

Gemäß der Erfindung wird eine Außenwand der Kavität des zweiten Bauteils während des Schritts des Zusammenfügens verformt. Das Verformen der Außenwand kann z.B. ein Biegen der Außenwand umfassen. Das Verformen kann entweder mechanisch, chemisch oder anderweitig erfolgen.

Gemäß einer weiteren Ausführungsform erfolgt, beispielsweise nach dem Verformen der Außenwand, ein Aushärten des Dicht- und/oder Verbindungsmaterials abhängig vom Anwendungsfall zu einem elastischen oder festen Dicht- und/oder Verbindungselement. Somit ist nach dem Aushärten ein elastisches oder festes Dicht- und/oder Verbindungsichtelement vorhanden, das eine Dichtwirkung und/oder eine Verbindungswirkung zwischen dem ersten Bauteil und dem zweiten Bauteil sicherstellt. Dabei ist vorgesehen, dass durch das Verformen der Außenwand der Kavität und dem Aushärten des Dicht- und/oder Verbindungsmaterials ein Abheben von erstem Bauteil und zweitem Bauteil voneinander zu einer Kompression des elastischen und/oder festen Dicht- und/oder Verbindungselements zwischen verformter Außenwand und Vorsprung führt. Somit wird, im Gegensatz zum Stand der Technik, das elastische bzw. feste Dicht- und/oder Verbindungselement komprimiert, wodurch die Dicht- und/oder Verbindungswirkung erhöht wird und insbesondere Porösitäten, während der Applizierung des Dicht- und/oder Verbindungsmittels verursacht, minimiert werden. Im Stand der Technik ist vielmehr der Fall, dass ein Abheben der Bauteile zueinander zu einer Verschlechterung der Dicht- bzw. Verbindungswirkung führt. Das Dichtmaterial ist vorteilhafterweise ein pastöses oder flüssiges Dichtmaterial, das aushärtende Eigenschaften aufweist. Nach dem Aushärten ist das entstehende elastische und/oder feste Dicht- und/oder Verbindungselement während der Beanspruchung sowohl auf Schub als auch auf Druck belastbar. Somit kann das Dicht- und/oder Verbindungsmaterial, das eine geringe Viskosität aufweist, auf das erste Bauteil und/oder das zweite Bauteil aufgebracht werden, wobei nach dem Aushärten ein elastisch oder festes Dicht- und/oder Verbindungselement vorhanden ist.

Das Verformen der Außenwand der Kavität kann insbesondere plastisch oder elastisch erfolgen. Sollen das erste Bauteil und das zweiten Bauteil später voneinander trennbar sein, so ist vorteilhafterweise vorgesehen, dass die Außenwand des Dicht- und/oder Verbindungsbereichs elastisch verformt wird. Dazu kann nach Anwendungsfall ein Trennmittel zwischen Bauteilwand und Dicht- und/oder Verbindungselement unterstützend wirken. Ist eine solche Trennung hingegen nicht vorgesehen, so kann die Außenwand der Kavität auch plastisch verformt werden. Durch die Verformung der Außenwand ist sichergestellt, dass ein Bewegen von erstem Bauteil und zweitem Bauteil zueinander stets zu einer Kompression des elastischen oder festen Dicht- und/oder Verbindungselements zwischen den Außenwänden erzeugt wird.

Gemäß einer weiteren Ausführungsform ist der Vorsprung verdickend, insbesondere keulenförmig, ausgebildet. Beispielsweise kann sich der Vorsprung zu einem freien Ende hin fertigen. Alternativ wird der Vorsprung vor dem Schritt des Zusammenfügens oder während des Zusammenfügens durch einen Verformungsschritt sich verdickend, insbesondere keulenförmig, geformt. Besonders vorteilhaft kann der Vorsprung auch vor dem Schritt des Einbringens des Dicht- und/oder Verbindungsmaterials sich verdickend, insbesondere, keulenförmig, geformt werden. Ein sich verdickendes, insbesondere keulenförmiges, Formen erfolgt insbesondere dadurch, dass ein Vorsprung mit beliebigem, insbesondere rechteckigem, Querschnitt durch Aufbringen von Kraft über einen Stempel verformt wird. Durch die sich verdickende Form, insbesondere die Keulenform, die innerhalb der Bauteilanordnung vollständig von dem Dicht- und/oder Verbindungsmaterial und damit dem elastischen Dichtelement umgeben ist, ist bei einem Abheben des ersten Bauteils von dem zweiten Bauteil stets eine Komprimierungskraft auf das elastische bzw. feste Dicht- und/oder Verbindungselement aufbringbar. Insbesondere kann das Dicht- und/oder Verbindungselement durch die sich verdickende Form, insbesondere die Keulenform, und die verformte Außenwand der Kavität komprimierbar sein.

Somit ist sichergestellt, dass stets eine ausreichende Funktionswirkung durch das Dicht- und/oder Verbindungselement vorhanden ist. Dies ist auch dann der Fall, wenn sich das erste Bauteil und das zweite Bauteil aufgrund von äußeren Betriebsumständen relativ zueinander bewegen.

Die zumindest eine Außenwand der Kavität wird erfindungsgemäß während des Schritts des Zusammenfügens verformt. Dabei kann das Verformen vorteilhafterweise durch ein eigenes Werkzeug oder durch das jeweils andere Bauteil erfolgen.

Besonders vorteilhaft weist das erste Bauteil eine Gegenwand auf, die an der Außenwand anliegt, wenn das erste Bauteil und das zweite Bauteil zu der Bauteilanordnung zusammengefügt sind. Außerdem führt die Gegenwand zu einem Verformen, insbesondere zu einem Verbiegen, der Außenwand innerhalb der Bauteilanordnung. Auf diese Weise ist das Verfahren vereinfacht, da der Schritt des Verformens automatisch zusammen mit dem Schritt des Zusammenfügens des ersten Bauteils und des zweiten Bauteils durchgeführt wird. Ein dediziertes Verformen der Außenwand muss damit nicht getätigt werden.

Die Außenwand wird vorteilhafterweise derart verformt, dass ein Querschnitt der Kavität bogenförmig ist. Dies ist insbesondere zusammen mit der Keulenform des Vorsprungs vorteilhaft, da Keulenform und Bogenform im Wesentlichen komplementär zueinander sind. Alternativ ist der Querschnitt kegelförmig. Somit führt ein Bewegen des ersten Bauteils relativ zu dem zweiten Bauteil stets zu einer Komprimierung des Dicht- und/oder Verbindungselements zwischen verformter Außenwand und keulenförmigen Vorsprung. Durch eine konstruktiv optimale Auslegung des Vorsprungs und der zu verformenden Außenwand wird die Dicht- bzw. Verbindungswirkung verstärkt. Dadurch ist die Dicht- bzw. Verbindungswirkung zwischen dem ersten Bauteil und dem zweiten Bauteil aufgrund des elastischen und/oder festen Dicht- und/oder Verbindungselements stets ausreichend vorhanden. Das erfindungsgemäße Verfahren erlaubt somit eine Bauteilanordnung bereitzustellen, die auch bei relativer Bewegung des ersten Bauteils zu dem zweiten Bauteil eine ausreichende Dicht- und/oder Verbindungswirkung zuverlässig sicherstellt.

In einer vorteilhaften Ausführungsform der Erfindung wird die Außenwand vor dem Zusammenfügen von dem ersten Bauteil und dem zweiten Bauteil derart verformt, dass ein Querschnitt der Kavität sich zu einem Wurzelbereich des Vorsprungs hin verjüngt. Dazu ist vorgesehen, dass sich das erste Bauteil und das zweite Bauteil in einem zusammengefügten Zustand befinden. Auf diese Weise ist wiederum bevorzugt vorgesehen, dass eine Bewegung des ersten Bauteils relativ zu dem zweiten Bauteil stets zu einer Komprimierung des Dicht- und/oder Verbindungselements zwischen der verformten Außenwand und dem Vorsprung führt. Somit ist eine Dicht- und/oder Verbindungswirkung verbessert.

Bevorzugt ist weiterhin vorgesehen, dass die Außenwand während und/oder nach dem Schritt des Aushärtens des Dicht- und/oder Verbindungsmittels verdickt wird. Insbesondere wird die Außenwand keulenförmig verdickt. Somit ist vorgesehen, dass der Querschnitt des Dichtbereichs sich zu einem Wurzelbereich des Vorsprungs im zusammengefügten Zustand von erstem Bauteil und zweitem Bauteil hin verjüngt. Auf diese Weise ist wiederum sichergestellt, dass eine Bewegung des ersten Bauteils relativ zu dem zweiten Bauteil stets zu einer Komprimierung des Dicht- und/oder Verbindungselements führt. Somit ist wiederum sichergestellt, dass die Dicht- und/oder Verbindungswirkung verbessert ist.

Gemäß einer weiteren Ausführungsform weist zumindest eines der Bauteile ein Führungselement auf, welches beim Zusammenfügen der Bauteile in eine Vertiefung des anderen Bauteils hineinragt. Durch das Führungselement kann vorteilhafterweise eine Aufnahme von Seitenkräften erzielt werden. Weiterhin ist es möglich, dass sowohl das erste Bauteil als auch das zweite Bauteil jeweils ein oder mehrere Führungselemente aufweisen, welche im gefühlten Zustand jeweils in Vertiefungen des jeweils anderen Bauteils hineinragen.

Gemäß einer weiteren Ausführungsform wird der Vorsprung des ersten Bauteils während des Zusammenfügens der Bauteile plastisch verformt. In der Ausführungsform, bei der sowohl das erste Bauteil also das zweite Bauteil einen Vorsprung aufweisen, können beide Vorsprünge beim Zusammenfügen plastisch verformt werden.

In einer weiteren bevorzugten Ausführungsform findet während des Aushärtens oder nach dem Aushärten des Dicht- und/oder Verbindungsmaterials eine Verdickung des Vorsprungs, insbesondere an einem freien Ende des Vorsprungs, statt. Insbesondere ist die Verdickung keulenförmig. Somit ist wiederum sichergestellt, dass ein Bewegen des ersten Bauteils relativ zu dem zweiten Bauteil zu einer Komprimierung des Dicht- und/oder Verbindungselements führt.

Des Weiteren wird eine Bauteilanordnung angegeben. Die Bauteilanordnung kann beispielsweise durch ein hier beschriebenes Verfahren herstellbar oder hergestellt sein. Die Bauteilanordnung kann somit ein oder mehrere Merkmale der vorgenannten, im Zusammenhang mit dem Verfahren beschriebenen Ausführungsformen aufweisen. Die vorangehend sowie nachfolgend beschriebenen Merkmale können gleichermaßen für das hier beschriebene Verfahren wie auch für die hier beschriebene Bauteilanordnung gelten.

Die Bauteilanordnung umfasst ein erstes Bauteil, das einen Vorsprung mit einem Hinterschnitt aufweist, sowie ein zweites Bauteil, das eine Kavität aufweist. Das erste Bauteil ist mit dem zweiten Bauteil verbunden. Weiterhin weist die Bauteilanordnung ein zu einem Dicht- und/oder Verbindungselement ausgehärtetes Dicht- und/oder Verbindungsmaterial auf, das in der Kavität des zweiten Bauteils angeordnet ist. Der Vorsprung des ersten Bauteils ragt in die Kavität des zweiten Bauteils hinein. Vorzugsweise ist der Vorsprung zumindest teilweise vom Dicht- und/oder Verbindungsmaterial umgeben. Beispielsweise kann der Vorsprung vollständig vom Dicht- und/oder Verbindungsmaterial umgeben sein. Gemäß einer weiteren Ausführungsform weisen sowohl das erste Bauteil als auch das zweite Bauteil jeweils eine Kavität und einen Vorsprung mit einem Hinterschnitt auf, wobei jeder Vorsprung in die Kavität des jeweils anderen Bauteils hineinragt. Die beiden Bauteile können z.B. bezüglich ihrer Oberflächenkontur identisch oder punktsymmetrisch aufgebaut sein

Gemäß der Erfindung ist eine Außenwand der Kavität gegenüber einem Zustand, in dem das zweite Bauteil nicht mit dem ersten Bauteil verbunden ist, verformt. Die Außenwand kann insbesondere verbogen sein. Somit ist bevorzugt vorgesehen, dass das Dicht- und/oder Verbindungselement komprimierbar ist, wenn sich das erste Bauteil von dem zweiten Bauteil abhebt, da in diesem Fall das Dicht- und/oder Verbindungselement zwischen der verformten Außenwand und dem Vorsprung einklemmbar ist. Besonders vorteilhaft ist vorgesehen, dass die Bauteilanordnung gemäß dem zuvor beschriebenen Verfahren hergestellt ist.

Bevorzugt weisen das erste Bauteil und das zweite Bauteil eine Gegenwand auf, die an der Außenwand anliegt. Durch das Anliegen der Außenwand eines Bauteils an einer Gegenwand des anderen Bauteils ist die Außenwand verformt, insbesondere verbogen. Sollte lediglich eines der beiden Bauteile die Außenwand aufweisen, so ist vorgesehen, dass lediglich dasjenige Bauteil, das die Außenwand nicht aufweist, die Gegenwand umfasst. Durch die Gegenwand findet autonom ein Verformen der Außenwand statt, sodass die Verformung der Außenwand nicht in einem eigenen Schritt durchgeführt werden muss. Besonders vorteilhaft ist vorgesehen, dass die Außenwand derart verformt ist, dass ein Querschnitt der Kavität bogenförmig oder keilförmig ist. Besonders vorteilhaft ist außerdem vorgesehen, dass der Vorsprung an einem Ende verdickt, insbesondere keulenförmig, geformt ist. Somit sind der Vorsprung und die Kavität vorteilhafterweise im Wesentlichen komplementär zueinander geformt. Dies führt insbesondere dazu, dass ein Bereich des Dicht- und/oder Verbindungselements stets zwischen verformter Außenwand und Vorsprung komprimierbar ist, wenn eine trennende Relativbewegung zwischen dem ersten Bauteil und dem zweiten Bauteil stattfindet. Durch Kompression des Dicht- und/oder Verbindungselements ist die Dicht- bzw. Verbindungswirkung des Dicht- und/oder Verbindungselements erhöht, wodurch in jedem Fall eine verbesserte Dicht- und/oder Verbindungswirkung zwischen dem ersten Bauteil und dem zweiten Bauteil vorhanden ist.

Besonders vorteilhaft weist das erste Bauteil und/oder das zweite Bauteil eine Überlaufkammer auf. In die Überlaufkammer kann aus der Kavität ausgetretenes Dicht- und/oder Verbindungsmaterial eintreten, sodass das überschüssig ausgetretene Dicht- und/oder Verbindungsmaterial von der Überlaufkammer auffangbar ist. Die Überlaufkammer erstreckt sich vorteilhafterweise um die Kavität herum. Insbesondere während des Fertigens der Bauteilanordnung ist vorgesehen, dass der Vorsprung in die Kavität eingeführt wird, wodurch das Dicht- und/oder Verbindungsmaterial zumindest teilweise aus der Kavität heraus verdrängt wird. Dieses verdrängte Dicht- und/oder Verbindungsmaterial ist anschließend von der Überlaufkammer auffangbar. Somit ist verhindert, dass das Dicht- und/oder Verbindungsmaterial unkontrolliert zwischen dem ersten Bauteil und dem zweiten Bauteil vorhanden ist. Auf diese Weise lässt sich die Dicht- und/oder Verbindungswirkung auf die Kavität eingrenzen, wobei eine Mengentoleranz bei dem Bereitstellen der Menge des Dicht- und/oder Verbindungsmaterials und Fertigungstoleranzen der beiden Bauteile ausgeglichen werden können. Somit ist sichergestellt, dass in jedem Fall das Dicht- und/oder Verbindungsmaterial über die gesamte Kavität vorhanden ist. Daher ist eine sichere und zuverlässige Abdicht- und/oder Verbindungswirkung gegeben.

Weitere Vorteile und vorteilhafte Ausführungsformen des hier beschriebenen Verfahrens bzw. der hier beschriebenen Bauteilanordnung ergeben sich aus den im Folgenden in Verbindung mit den Figuren 1A bis 4B beschriebenen Ausführungsformen. Es zeigen:
- Figur 1A: eine schematische Abbildung eines ersten Bauteils einer Bauteilanordnung gemäß einem Ausführungsbeispiel,
- Figur 1B: eine schematische Abbildung des ersten Bauteils und eines zweiten Bauteils der Bauteilanordnung während eines Fertigungsprozesses gemäß einem weiteren Ausführungsbeispiel,
- Figur 1C: eine schematische Abbildung der Bauteilanordnung in einem endgefertigten Zustand gemäß einem weiteren Ausführungsbeispiel,
- Figuren 2 bis 3D: eine schematische Abbildungen von Bauteilanordnungen in einem endgefertigten Zustand gemäß einem nicht erfindungsgemäßen Beispiel, und
- Figuren 4A bis 4B: eine schematische Darstellung eines Verfahrens zum Verbinden von zwei Bauteilen gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

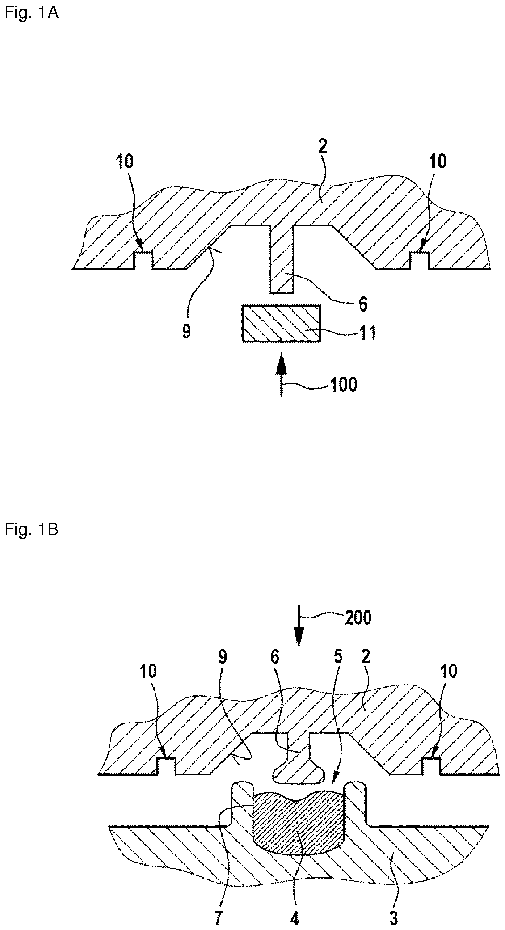

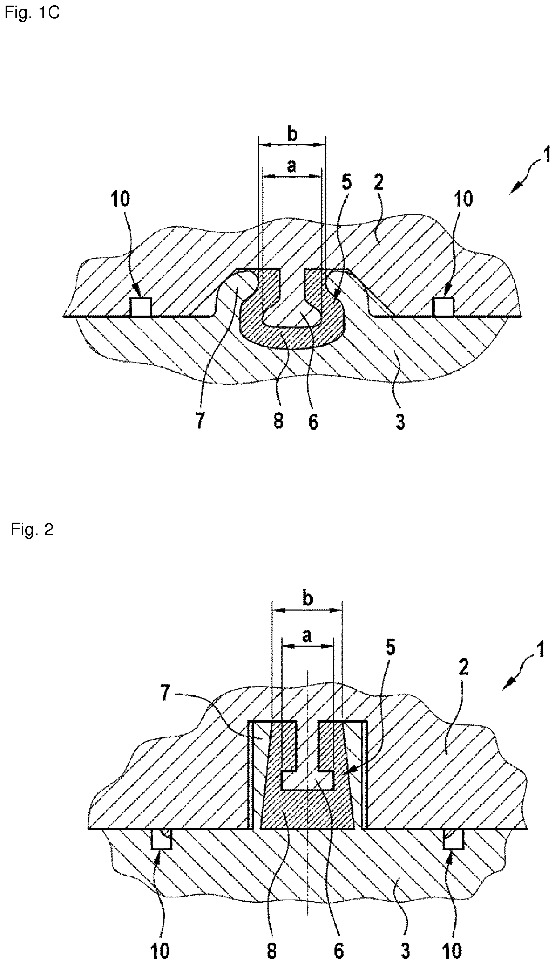

Figur 1A zeigt schematisch ein erstes Bauteil 2, das mit einem zweiten Bauteil 3 (vergleiche Figur 1B) zu einer Bauteilanordnung 1 (vergleiche Figur 1C) verbunden werden soll. Dazu kommt ein Ausführungsbeispiel des erfindungsgemäßen Verfahrens zum Einsatz.

In Figur 1A ist ein erster Schritt dieses Verfahrens gezeigt. Mittels eines Stempels 11 wird ein Vorsprung 6 des ersten Bauteils 2 verformt. Der Stempel 11 wird dazu entlang einer ersten Richtung 100 auf das erste Bauteil 2 zubewegt. Insbesondere erfolgt auf diese Weise eine verdickende Verformung am Ende des Vorsprungs 6. Diese verdickende Verformung des Vorsprungs 6 ist in Figur 1B gezeigt. Insbesondere ist die Verformung keulenförmig.

Figur 1B zeigt einen weiteren Schritt des Verfahrens zum Herstellen der Bauteilanordnung 1. Dazu wird das erste Bauteil 2 an das zweite Bauteil 3 angefügt. Das zweite Bauteil 3 weist eine Kavität 5 auf, der durch Außenwände 7 begrenzt ist. In die Kavität 5 und damit zwischen den Außenwänden 7 ist ein, insbesondere pastöses bzw. flüssiges, Dicht- und/oder Verbindungsmaterial 4 eingebracht. Das Dicht- und/oder Verbindungsmaterial 4 ist somit auf das zweite Bauteil 3 aufgetragen. Vorteilhaftweise weist das Dicht- und/oder Verbindungsmaterial 4 eine geringe Viskosität auf, und ist somit leicht verformbar und verdrängbar.

Zum Fertigen der Bauteilanordnung 1 wird das erste Bauteil 2 entlang einer zweiten Richtung 200, die hier und im Folgenden auch als Fügerichtung bezeichnet werden kann, auf das zweite Bauteil 3 aufgesetzt oder umgekehrt. Dies führt dazu, dass der Vorsprung 6 in die Kavität 5 eintaucht und das Dicht- und/oder Verbindungsmaterial 4 teilweise verdrängt. Somit erfolgt ein Auslaufen des Dicht- und/oder Verbindungsmaterials 4 aus der Kavität 5. Um das auslaufende Dicht- und/oder Verbindungsmaterial 4 aufzufangen, umfasst das erste Bauteil 2 Überlaufkammern 10, in denen das Dicht- und/oder Verbindungsmaterial 4 auffangbar ist. Die Überlaufkammern 10 können wahlweise auch in Bauteil 3 angebracht werden.

In Figur 1B ist außerdem ersichtlich, dass das erste Bauteil 2 Gegenwände 9 aufweist. Die Gegenwände 9 liegen gegenüber der Außenwände 7 der Kavität 5 des zweiten Bauteils 3. Während des Vorgangs des Zusammenfügens des ersten Bauteils 2 und des zweiten Bauteils 3 kommen die Außenwände 7 somit mit den Gegenwänden 9 in Kontakt. Sobald die Außenwände 7 und die Gegenwände 9 in Kontakt kommen, erfolgt bei weiterem Bewegen des ersten Bauteils 2 entlang der zweiten Richtung 200 eine Verformung der Außenwände 7 der Kavität 5. Dies ist aus Figur 1C ersichtlich. Sobald das erste Bauteil 2 und das zweite Bauteil 3 zu der Bauteilanordnung 1 zusammengefügt sind, sind die Außenwände mechanisch maximal verformt.

Figur 1C zeigt schematisch die Bauteilanordnung 1, die durch Zusammenfügen von erstem Bauteil 2 und zweitem Bauteil 3 erreicht wurde. Dabei ist einerseits überschüssiges Dicht- und/oder Verbindungsmaterial 4, das durch den Vorsprung 6 aus der Kavität 5 heraus verdrängt wurde, in den Überlaufkammern 10 des ersten Bauteils 2 aufgenommen. Gleichzeitig sind die Außenwände 7 der Kavität 5 verformt. Auf diese Weise weist die Kavität 5 mit den verformten Außenwänden 7 einen Querschnitt auf, der im Wesentlichen bogenförmig ist. Da der Vorsprung 6 keulenförmig verformt ist, sind eine Außenkontur des Vorsprungs 6 und einen Innenkontur der Kavität 5 im Wesentlichen komplementär zueinander.

Das Dicht- und/oder Verbindungsmaterial 4 wird nach dem Zusammenfügen von erstem 5 Bauteil 2 und zweitem Bauteil 3 ausgehärtet, sodass ein elastisches Dicht- und/oder Verbindungselement 8 entsteht. Durch das Dicht- und/oder Verbindungselement 8 ist eine sichere und zuverlässige Verbindungs- und/oder Abdichtwirkung zwischen dem ersten Bauteil 2 und dem zweiten Bauteil 3 vorhanden. Insbesondere in dem Fall, in dem das erste Bauteil 2 und das zweite Bauteil 3 unterschiedliche Materialien aufweisen, können aufgrund äußerer Betriebsumstände, wie beispielsweise einem Abheben des ersten Bauteils 2 von dem zweiten Bauteil 3 oder einer unterschiedlichen Erwärmung aufgrund unterschiedlicher Wärmeausdehnungskoeffizienten Relativbewegungen zwischen dem ersten Bauteil 2 und dem zweiten Bauteil 3 auftreten. Insbesondere eine Bewegung entgegen der zweiten Richtung 200 würde bei bekannten Dichtungen bzw. Verbindungen aus dem Stand der Technik zu einer Verringerung der Dicht- und/oder Verbindungswirkung führen, da bekannte Dichtungen bzw. Verbindungen stets einen Anpressdruck zwischen erstem Bauteil 2 und zweitem Bauteil 3 benötigen. Im Gegensatz dazu stellt die erfindungsgemäße Bauteilanordnung 1 auch dann eine verbesserte Abdicht- und/oder Verbindungskraft sicher, wenn das erste Bauteil 2 relativ zu dem zweiten Bauteil 3 entgegen der zweiten Kraft 200 bewegt wird. Durch den keulenförmigen Vorsprung 6 und die verformten Außenwände 7 der Kavität 5 führt ein Bewegen des ersten Bauteils 2 entgegen der zweiten Richtung 200 zu einer Kompression des Verbindungs- und/oder Dichtelements 8 zwischen dem keulenförmigen Vorsprung 6 und den verformten Außenwänden 7.

Durch die Kompression ist ein erhöhter Druck auf das Dicht- und/oder Verbindungselement 8 vorhanden, wodurch die Dicht- und/oder Verbindungswirkung verbessert ist. Somit ist eine ausreichende Dicht- und/oder Verbindungswirkung zwischen dem ersten Bauteil 2 und dem zweiten Bauteil 3 in jeder Situation vorhanden, wobei diese Dicht- und/oder Verbindungswirkung bei einem Abheben des ersten Bauteils 2 von dem zweiten Bauteil 3 sogar verstärkt ist.

Es ist vorgesehen, dass die gesamte Kavität 5 mit dem Dicht- und/oder Verbindungsmaterial 4 derart ausgefüllt ist, sodass das Dicht- und/oder Verbindungselement 8 innerhalb der gesamten Kavität 5 und je nach Anwendungsfall bis zu den Überlaufkammern 10 vorhanden ist. Dies wird vorteilhafterweise dadurch erreicht, dass ausreichend Dicht- und/oder Verbindungsmaterial 4 in die Kavität 5 eingebracht wird, sodass ein Einführen des Vorsprungs 6 in die Kavität 5 zu einem Verdrängen eines Teils des Dicht- und/oder Verbindungsmaterials 4 aus der Kavität 5 führt. Das verdrängte Dicht- und/oder Verbindungsmaterial 4 wird anschließend von den Überlaufkammern 10 des ersten Bauteils 2 aufgenommen. Auf diese Weise ist sichergestellt, dass die Kavität 5 vollständig mit dem Dicht- und/oder Verbindungsmaterial 4 und damit dem Dicht- und/oder Verbindungselement 8 gefüllt ist, wobei gleichzeitig kein überschüssiges Dicht- und/oder Verbindungsmaterial 4 unkontrolliert zwischen dem ersten Bauteil 2 und dem zweiten Bauteil 3 verbleibt.

Das Verformen der Außenwände 7 kann entweder plastisch oder elastisch erfolgen. Ist vorgesehen, dass die Bauteilanordnung 1 wieder gelöst werden soll, so ist vorteilhafterweise eine elastische Verformung der Außenwände 7 vorhanden. Dies kann durch ein Aufbringen eines Trennmittels und/oder Gleitmittels vor der Einbringung des Dicht- und/oder Verbindungsmaterials 4 mit folgender Montage der Bauteile unterstützen. Ist eine Demontage der Bauteilanordnung 1 nicht vorgesehen, so können die Außenwände 7 auch plastisch verformt und das Trenn- bzw. Gleitmittel eingespart werden. Vorteilhafterweise ist außerdem vorgesehen, dass eine maximale Breite a des keulenförmigen Vorsprungs 6 geringer ist als eine minimale Öffnungsweite b der verformten Außenwände 7. Somit ist ein Entfernen des Vorsprungs 6 aus der Kavität 5 möglich. Dennoch ist durch die Keulenform und die verformten Außenwände 7 ermöglicht, dass das Dicht- und/oder Verbindungselement 8 zwischen keulenförmigem Vorsprung 6 und verformten Außenwänden 7 komprimierbar ist, wenn das erste Bauteil 2 von dem zweiten Bauteil 3 abhebt.

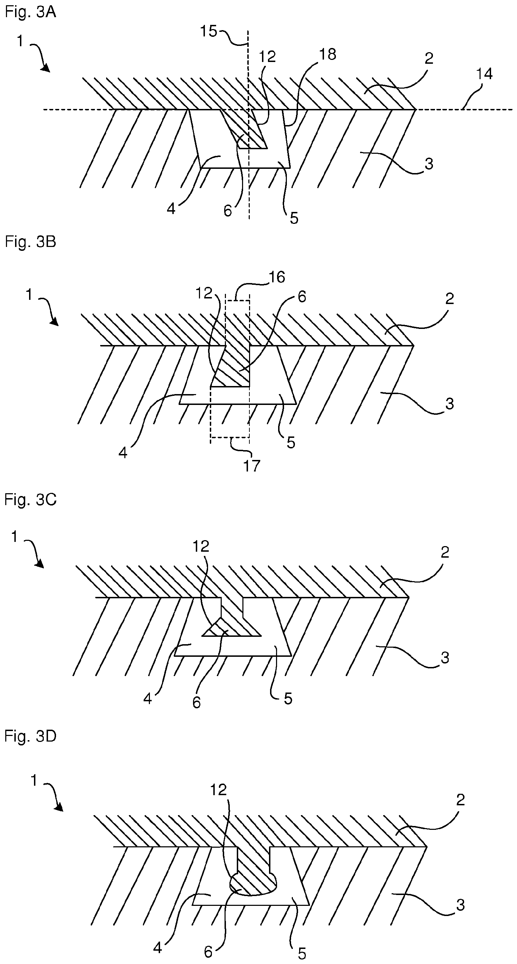

Schließlich zeigt Figur 2 die Bauteilanordnung 1 gemäß einem nicht erfindungsgemäßen Beispiel. Wiederum weist die Bauteilanordnung 1 ein erstes Bauteil 2 und ein zweites Bauteil 3 auf. Dabei ist in dem zweiten Bauteil 3 eine Kavität 5 angebracht. Die Kavität 5 ist analog zu dem vorherigen Ausführungsbeispiel mit einem Dicht- und/oder Verbindungsmaterial 4 gefüllt. Außerdem weist das zweite Bauteil 3 Überlaufkammern 10 analog zu dem zuvor beschriebenen Ausführungsbeispiel auf. Das erste Bauteil 2 weist einen Vorsprung 6 auf, der T-förmig geformt ist. Der T-förmige Vorsprung greift in die Kavität ein. In der in Fig. 2 dargestellten Bauteilanordnung 1 sind das erste Bauteil 2 und das zweite Bauteil 3 in einem endgefertigten Zustand, d.h. in einem Zustand, in dem das erste Bauteil 2 und das zweite Bauteil 3 zusammengefügt sind, gezeigt. Durch die Kavität 5 und das Dicht- und/oder Verbindungsmaterial 4 sind das erste Bauteil 2 und das zweite Bauteil 3 gegeneinander abgedichtet. Die Kavität 5 ist von Außenwänden 7 umgeben, die sich 5 von einem freien Ende des Vorsprungs 6 zu einem Wurzelbereich des Vorsprungs 6 hin verjüngt. Somit bewirkt, analog zu dem vorherigen Ausführungsbeispiel, ein Abheben des ersten Bauteils 2 von dem zweiten Bauteil 3 eine Kompression des zu einem elastischen Dicht- und/oder Verbindungselement ausgehärteten Dicht- und/oder Verbindungsmaterials 4. Somit werden dieselben 10 Vorteile erreicht wie im zuvor beschriebenen Ausführungsbeispiel. Im Unterschied zu dem vorherigen Ausführungsbeispiel werden die Außenwände 7 des zweiten Bauteils 3 nicht während des Zusammenfügens von erstem Bauteil 2 und zweitem Bauteil 3 verformt. Die Figuren 3A bis 3D zeigen Bauteilanordnungen 1 gemäß weiteren

Beispielen. Die Bauteilanordnung 1 gemäß der Figur 3A umfasst ein erstes Bauteil 2 mit einem Vorsprung 6, der einen Hinterschnitt 12 aufweist, sowie ein zweites Bauteil 3 mit einer Kavität 5 mit einem Hinterschnitt 18. Beide Hinterschnitte 12 und 18 sind sich gegenüberliegend angeordnet. In der Kavität 5 ist ein zu einem Dicht- und/oder Verbindungselement ausgehärtetes Dicht- und/oder Verbindungsmaterial 4 angeordnet, welches den in die Kavität 5 ragenden Vorsprung 6 des ersten Bauteils 2 umgibt. Die Kavität 5 weist im Wesentlichen einen über die Höhe der Kavität konstanten Durchmesser auf. Auch der Vorsprung 6 des ersten Bauteils 2 weist im Wesentlichen eine durchgängig konstante Breite bzw. Dicke auf. Der Hinterschnitt 12 des Vorsprungs 6 entsteht aufgrund der Neigung des Vorsprungs 6 gegenüber einer Fügeachse 15, welche orthogonal zur Trennebene 14, welche zwischen dem ersten Bauteil 2 und dem zweiten Bauteil 3 verläuft, eingezeichnet ist. Die Fügeachse 15 verläuft parallel zur Fügerichtung 200 und parallel zur planmäßigen Belastungsrichtung der Bauteilanordnung 1.

Die Bauteilanordnung 1 gemäß der Figur 3B unterscheidet sich von der Bauteilanordnung 1 gemäß der Figur 3A dadurch, dass der Öffnungsbereich der Kavität 5 kleiner ausgebildet ist als der Bodenbereich der Kavität 5. In anderen Worten verengt sich die Kavität 5 des zweiten Bauteils 3 in Richtung der Öffnung der Kavität 5. Ein weiterer Unterschied zum Ausführungsbeispiel gemäß der Figur 3B ergibt sich dadurch, dass der Vorsprung 6 des ersten Bauteils 2 eine in Richtung des Bodenbereichs der Kavität 5 zunehmende Breite aufweist, wodurch der Hinterschnitt 12 gebildet wird. Der Vorsprung 6 weist eine erste Breite 16 und in unmittelbarer Nähe des Bodenbereichs der Kavität 5 eine zweite Breite 17 auf, wobei die zweite Breite 17 größer ist als die erste Breite 16. In anderen Worten ist die räumliche Ausdehnung des Vorsprungs 6 parallel zum Bodenbereich der Kavität 5 in einem Bereich, welcher näher am Bodenbereich angeordnet ist größer als in einem Bereich, welcher weiter vom Bodenbereich der Kavität 5 entfernt ist.

In den Figuren 3C und 3D sind weitere Ausführungsbeispiele von Bauteilanordnungen 1 dargestellt, wobei sich die einzelnen Bauteilanordnungen 1 gegenüber der Bauteilanordnung 1 gemäß der Figur 3B durch die Form und/oder Größe des Vorsprungs 6 unterscheiden. Das erste Bauteil 2 der Bauteilanordnung 1 gemäß der Figur 3C weist einen ersten Teilabschnitt mit einer durchgängig konstanten Breite bzw. einem durchgängig konstanten Durchmesser sowie einen zweiten Teilabschnitt, dessen Breite bzw. Durchmesser sich in Richtung des Bodenbereichs der Kavität 5 vergrößert, auf. Der zweite Teilabschnitt ist dabei näher am Bodenbereich der Kavität 5 angeordnet als der erste Teilabschnitt. Durch den sich in Richtung des Bodenbereichs vergrößernden zweiten Teilabschnitt wird ein Hinterschnitt 12 des Vorsprungs 6 ausgebildet.

Der Vorsprung 6 des ersten Bauteils 2 der Bauteilanordnung 1 gemäß der Figur 3D weist eine Keulenform auf. Durch die Keulenform entsteht ein Teilabschnitt des Vorsprungs 6, welcher sich in Richtung des Bodenbereichs der Kavität 5 verbreitert bzw. vergrößert, wodurch ein Hinterschnitt 12 gebildet ist. Die Keulenform kann z.B. durch einen Umformschritt vor dem Zusammenfügen der Bauteile 2, 3 entstehen.

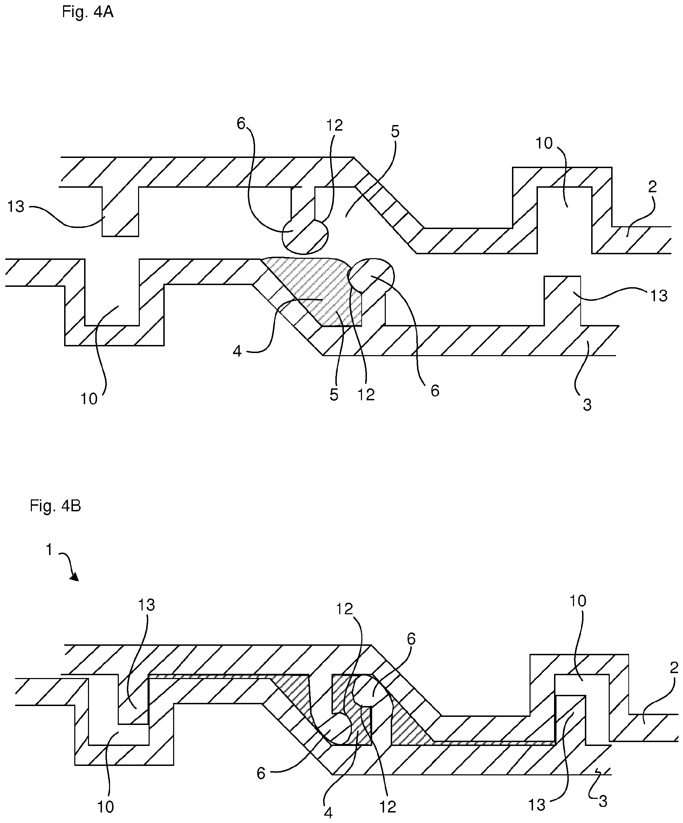

In den Figuren 4A und 4B ist ein Verfahren zum Herstellen einer Bauteilanordnung 1 gemäß einem weiteren Ausführungsbeispiel dargestellt. Dabei werden ein erstes Bauteil 2 und ein zweites Bauteils 3 bereitgestellt, wobei die Bauteile 2, 3 jeweils eine Kavität 5 und einen Vorsprung 6 mit einem Hinterschnitt 12 aufweisen. Im gezeigten Ausführungsbeispiel sind die Bauteile 2, 3 bezüglich der zu verbindenden Oberflächen identisch bzw. punktsymmetrisch ausgebildet. Die Bauteile 2, 3 weisen weiterhin jeweils eine Überlaufkammer 10 sowie ein Führungselement 13, deren Funktionsweise im Folgenden weiter beschrieben wird, auf.

Vor dem Zusammenfügen der Bauteile 2, 3 wird ein Dicht- und/oder Verbindungsmaterial 4 in die Kavität 5 des zweiten Bauteils 3 eingebracht. Anschließend werden die Bauteile 2, 3 derart zusammengefügt, dass der Vorsprung 6 des ersten Bauteils 2 in die Kavität 5 des zweiten Bauteils 3 und der Vorsprung 6 des zweiten Bauteils 3 die Kavität 5 des ersten Bauteils 2 ragen. Weiterhin werden die Vorsprünge 6 der Bauteile 2, 3 beim Zusammenfügen elastisch oder plastisch verformt. Nach dem Zusammenfügen sind die Vorsprünge 6 vom Dicht- und/oder Verbindungsmaterial 4, welches zu einem elastischen bzw. festen Dicht- und/oder Verbindungselement aushärten kann, umgeben. Von den Vorsprüngen 6 verdrängtes Dicht- und/oder Verbindungsmaterial 4 kann in Überlaufkammern 10 der Bauteile 2, 3 aufgenommen werden. Die Führungselemente 13 der Bauteile 2, 3 Fragen nach dem Zusammenfügen in die Überlaufkammer 10 des jeweils anderen Bauteils 2, 3, wodurch vorteilhafterweise Seitenkräfte aufgenommen werden können.

Prinzipiell können die Vorsprünge 6 der Figuren 3B bis 3D eine Vielzahl von verschiedenen möglichen Formen bzw. Größen aufweisen. Vorzugsweise vergrößern sich die Vorsprünge 6 in Richtung des freien Endes. Die Hinterschnitte der Vorsprünge 6 und Außenwände liegen vorzugsweise den Hinterschnitten der Gegenwände in den Kavitäten 5 gegenüber. Die Vorsprünge 6 und Kavitaten 5 können mechanisch, chemisch, elektrochemisch und/oder thermisch hergestellt werden.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Bauteilanordnung
- 2: erstes Bauteil
- 3: zweites Bauteil
- 4: Dicht-/Verbindungsmaterial
- 5: Kavität
- 6: Vorsprung
- 7: Außenwand
- 8: Dicht-/Verbindungselement
- 9: Gegenwand
- 10: Überlaufkammer
- 11: Stempel
- 12: Hinterschnitt
- 13: Führungselement
- 14: Trennebene
- 15: Fügeachse
- 16: erste Breite
- 17: zweite Breite
- 18: Hinterschnitt der Kavität
- 100: erste Richtung
- 200: zweite Richtung
- a: maximale Breite
- b: minimale Öffnungsweite

## Patentansprüche

1. Verfahren zum Verbinden eines ersten Bauteils (2) mit einem zweiten Bauteil (3), umfassend die Schritte:
- Bereitstellen eines ersten Bauteils (2), welches einen Vorsprung (6) mit einem Hinterschnitt (12) aufweist,
- Bereitstellen eines zweiten Bauteils (3), welches eine Kavität (5) aufweist,
- Einbringen eines Dicht- und/oder Verbindungsmaterials (4) in die Kavität (5) des zweiten Bauteils (3),
- Zusammenfügen des ersten Bauteils (2) und des zweiten Bauteils (3) zu einer Bauteilanordnung (1), wobei der Vorsprung (6) des ersten Bauteils (2) im gefügten Zustand in die Kavität (5) des zweiten Bauteils (3) hineinragt,
- wobei eine Außenwand (7) der Kavität (5) des zweiten Bauteils (3) während des Schritts des Zusammenfügens verformt wird.

2. Verfahren nach Anspruch 1, wobei das Dicht- und/oder Verbindungsmaterial (4) als Verbindungsmaterial zum form- und/oder kraftschlüssigen Verbinden der Bauteile (2, 3), insbesondere als Klebematerial, ausgebildet ist.

3. Verfahren nach Anspruch 1, wobei das Dicht- und/oder Verbindungsmaterial (4) als Dichtmaterial, insbesondere als Dichtmaterial zum Abdichten gegenüber gasförmigen und/oder flüssigen Medien, ausgebildet ist.

4. Verfahren nach Anspruch 1, wobei das Dicht- und/oder Verbindungsmaterial (4) kombiniert als Verbindungsmaterial zum form- und/oder kraftschlüssigen Verbinden der Bauteile (2, 3) und als Dichtmaterial ausgebildet ist.

5. Verfahren nach einem der vorhergehenden Ansprüche, wobei die Kavität (5) einen Öffnungsbereich und einen Bodenbereich aufweist, wobei der Öffnungsbereich größer ist als der Bodenbereich.

6. Verfahren nach einem der vorhergehenden Ansprüche, wobei der Vorsprung (6) hinterschnittig ausgebildet ist in Bezug auf eine Fügeachse (15), die im Wesentlichen parallel zu einer im gefügten Zustand planmäßigen Belastungsrichtung der Bauteilanordnung (1) verläuft.

7. Verfahren nach Anspruch 6, wobei die Fügeachse (15) orthogonal zu einer Trennebene (14) verläuft, die wenigstens abschnittsweise tangential zum Öffnungsbereich der Kavität (5) verläuft.

8. Verfahren nach einem der vorhergehenden Ansprüche, wobei der Vorsprung (6) eine erste Breite (16) und eine zweite Breite (17) aufweist, wobei die zweite Breite (17) im gefügten Zustand sich näher am Bodenbereich der Kavität (5) befindet als die erste Breite (16), und wobei die zweite Breite (17) größer ist als die erste Breite (16).

9. Verfahren nach einem der vorhergehenden Ansprüche, wobei das Dicht- und/oder Verbindungsmaterial (4) zu einem elastischen oder festen Dicht- und/oder Verbindungselement (8) aushärtet.

10. Verfahren nach einem der vorhergehenden Ansprüche, wobei der Vorsprung (6) sich verdickend, insbesondere keulenförmig, ist und/oder vor dem Schritt des Zusammenfügens in einem Umformschritt sich verdickend, insbesondere keulenförmig, geformt wird.

11. Verfahren nach einem der vorhergehenden Ansprüche, wobei das erste Bauteil (2) eine Gegenwand (9) aufweist, die in der Bauteilanordnung (1) an der Außenwand (7) anliegt, und die beim Zusammenfügen vom ersten Bauteil (2) und zweiten Bauteil (3) die Außenwand (7) verformt.

12. Verfahren nach einem der vorhergehenden Ansprüche, wobei die Außenwand (7) derart verformt wird, dass ein Querschnitt der Kavität (5) bogenförmig ist.

13. Bauteilanordnung (1), umfassend
- ein erstes Bauteil (2), das einen Vorsprung (6) mit einem Hinterschnitt (12) aufweist,
- ein zweites Bauteil (3), das eine Kavität (5) aufweist und mit dem ersten Bauteil (2) verbunden ist,
- ein zu einem Dicht- und/oder Verbindungselement (8) ausgehärtetes Dicht- und/oder Verbindungsmaterial (4), das in der Kavität (5) des zweiten Bauteils (3) angeordnet ist,
- wobei der Vorsprung (6) des ersten Bauteils (2) in die Kavität (5) hineinragt und zumindest teilweise vom Dicht- und/oder Verbindungselement (8) umgeben ist,
- wobei zumindest eine Außenwand (7) der Kavität (5) gegenüber einem Zustand, in dem das zweite Bauteil (3) nicht mit dem ersten Bauteil (2) verbunden ist, verformt ist, und
- wobei das erste Bauteil (2) eine Gegenwand (9) aufweist, die an der Außenwand (7) anliegt, sodass die Außenwand (7) verformt ist.

14. Bauteilanordnung (1) nach Anspruch 13, wobei das erste Bauteil (2) und/oder das zweite Bauteil (3) eine Überlaufkammer (10) aufweisen, in der aus der Kavität (5) ausgetretenes Dichtmaterial (4) aufgefangen ist.

## Claims

1. Method for the connection of a first component (2) to a second component (3), comprising the steps:
- providing a first component (2) which has a projection (6) with an undercut (12),
- providing a second component (3) which has a cavity (5),
- introducing a sealing and/or connecting material (4) into the cavity (5) of the second component (3),
- joining the first component (2) and the second component (3) together to form a component arrangement (1), wherein the projection (6) of the first component (2) projects, in the joined state, into the cavity (5) of the second component (3),
- wherein an outer wall (7) of the cavity (5) of the second component (3) is deformed during the joining-together step.

2. Method according to Claim 1, wherein the sealing and/or connecting material (4) is formed as connecting material for the positively locking and/or non-positively locking connection of the components (2, 3), in particular as adhesive material.

3. Method according to Claim 1, wherein the sealing and/or connecting material (4) is formed as sealing material, in particular as sealing material for sealing with respect to gaseous and/or liquid media.

4. Method according to Claim 1, wherein the sealing and/or connecting material (4) is formed in combination as connecting material for the positively locking and/or non-positively locking connection of the components (2, 3) and as sealing material.

5. Method according to any one of the preceding claims, wherein the cavity (5) has an opening region and a base region, wherein the opening region is larger than the base region.

6. Method according to any one of the preceding claims, wherein the projection (6) is of undercut form in relation to a joining axis (15) which runs substantially parallel to an intended loading direction of the component arrangement (1) in the joined state.

7. Method according to Claim 6, wherein the joining axis (15) runs orthogonally with respect to a parting plane (14) which, at least in sections, runs tangentially with respect to the opening region of the cavity (5).

8. Method according to any one of the preceding claims, wherein the projection (6) has a first width (16) and a second width (17), wherein, in the joined state, the second width (17) is situated closer to the base region of the cavity (5) than the first width (16), and wherein the second width (17) is greater than the first width (16).

9. Method according to any one of the preceding claims, wherein the sealing and/or connecting material (4) cures to form an elastic or solid sealing and/or connecting element (8).

10. Method according to any one of the preceding claims, wherein the projection (6) is of thickening, in particular club-like form, and/or is formed into a thickening, in particular club-like form in a deformation step before the joining-together step.

11. Method according to any one of the preceding claims, wherein the first component (2) has an opposing wall (9) which, in the component arrangement (1), bears against the outer wall (7) and which deforms the outer wall (7) during the joining-together of the first component (2) and second component (3).

12. Method according to any one of the preceding claims, wherein the outer wall (7) is deformed such that a cross section of the cavity (5) is of arcuate form.

13. Component arrangement (1), comprising
- a first component (2), which has a projection (6) with an undercut (12),
- a second component (3), which has a cavity (5) and which is connected to the first component (2),
- a sealing and/or connecting material (4) which has cured to form a sealing and/or connecting element (8) and which is arranged in the cavity (5) of the second component (3),
- wherein the projection (6) of the first component (2) projects into the cavity (5) and is at least partially surrounded by the sealing and/or connecting element (8),
- wherein at least one outer wall (7) of the cavity (5) is deformed in relation to a state in which the second component (3) is not connected to the first component (2), and
- wherein the first component (2) has an opposing wall (9) which bears against the outer wall (7) such that the outer wall (7) is deformed.

14. Component arrangement (1) according to Claim 13, wherein the first component (2) and/or the second component (3) have an overflow chamber (10) in which sealing material (4) that has emerged from the cavity (5) is collected.

## Revendications

1. Procédé d'assemblage d'une première pièce (2) à une deuxième pièce (3), comportant les étapes suivantes :
- fourniture d'une première pièce (2), laquelle comprend une saillie (6) dotée d'une contre-dépouille (12),
- fourniture d'une deuxième pièce (3), laquelle comprend une cavité (5),
- introduction d'un matériau d'étanchéité et/ou d'assemblage (4) dans la cavité (5) de la deuxième pièce (3),
- jonction de la première pièce (2) et de la deuxième pièce (3) pour former un ensemble de pièces (1), la saillie (6) de la première pièce (2) pénétrant dans la cavité (5) de la deuxième pièce (3) dans l'état joint,
- une paroi extérieure (7) de la cavité (5) de la deuxième pièce (3) étant déformée pendant l'étape de jonction.

2. Procédé selon la revendication 1, le matériau d'étanchéité et/ou d'assemblage (4) étant réalisé sous forme de matériau d'assemblage pour l'assemblage par complémentarité de formes et/ou à force des pièces (2, 3), en particulier sous forme de matériau adhésif.

3. Procédé selon la revendication 1, le matériau d'étanchéité et/ou d'assemblage (4) étant réalisé sous forme de matériau d'étanchéité, en particulier sous forme de matériau d'étanchéité servant à réaliser l'étanchéité par rapport à des milieux gazeux et/ou liquides.

4. Procédé selon la revendication 1, le matériau d'étanchéité et/ou d'assemblage (4) étant réalisé de manière combinée sous forme de matériau d'assemblage pour l'assemblage par complémentarité de formes et/ou à force des pièces (2, 3) et sous forme de matériau d'étanchéité.

5. Procédé selon l'une des revendications précédentes, la cavité (5) comprenant une région d'ouverture et une région de base, la région d'ouverture étant plus grande que la région de base.

6. Procédé selon l'une des revendications précédentes, la saillie (6) étant réalisée en contre-dépouille par rapport à un axe de jonction (15) qui s'étend sensiblement parallèlement à une direction de sollicitation, prévue dans l'état joint, de l'ensemble de pièces (1).

7. Procédé selon la revendication 6, l'axe de jonction (15) s'étendant orthogonalement à un plan de séparation (14) qui s'étend au moins dans certaines parties de manière tangentielle à la région d'ouverture de la cavité (5) .

8. Procédé selon l'une des revendications précédentes, la saillie (6) présentant une première largeur (16) et une deuxième largeur (17), la deuxième largeur (17) se trouvant plus près de la région de base de la cavité (5) que la première largeur (16) dans l'état joint, et la deuxième largeur (17) étant plus grande que la première largeur (16).

9. Procédé selon l'une des revendications précédentes, le matériau d'étanchéité et/ou d'assemblage (4) durcissant pour former un élément d'étanchéité et/ou d'assemblage élastique ou solide (8).

10. Procédé selon l'une des revendications précédentes, la saillie (6) s'épaississant, en particulier étant en forme de massue, et/ou étant formée de manière à s'épaissir, en particulier en forme de massue, dans une étape de déformation avant l'étape de jonction.

11. Procédé selon l'une des revendications précédentes, la première pièce (2) comprenant une paroi conjuguée (9) qui s'appuie contre la paroi extérieure (7) dans l'ensemble de pièces (1), et qui déforme la paroi extérieure (7) lors de la jonction de la première pièce (2) et de la deuxième pièce (3).

12. Procédé selon l'une des revendications précédentes, la paroi extérieure (7) étant déformée de telle sorte qu'une section transversale de la cavité (5) soit arquée.

13. Ensemble de pièces (1), comportant
- une première pièce (2), laquelle comprend une saillie (6) dotée d'une contre-dépouille (12),
- une deuxième pièce (3), laquelle comprend une cavité (5) et est assemblée à la première pièce (2),
- un matériau d'étanchéité et/ou d'assemblage (4) durci pour former un élément d'étanchéité et/ou d'assemblage (8), lequel matériau est disposé dans la cavité (5) de la deuxième pièce (3),
- la saillie (6) de la première pièce (2) pénétrant dans la cavité (5) et étant entourée au moins partiellement par l'élément d'étanchéité et/ou d'assemblage (8),
- au moins une paroi extérieure (7) de la cavité (5) étant déformée par rapport à un état dans lequel la deuxième pièce (3) n'est pas assemblée à la première pièce (2), et
- la première pièce (2) comprenant une paroi conjuguée (9) qui s'appuie contre la paroi extérieure (7) de sorte que la paroi extérieure (7) soit déformée.

14. Ensemble de pièces (1) selon la revendication 13, la première pièce (2) et/ou la deuxième pièce (3) comprenant une chambre de trop-plein (10) dans laquelle du matériau d'étanchéité (4) sortant de la cavité (5) est recueilli.
